(19) Europäisches Patentamt
European Patent Office
Office européen des brevets

(11) Veröffentlichungsnummer: **0 275 399 B1**

(12) # EUROPÄISCHE PATENTSCHRIFT

(45) Veröffentlichungstag der Patentschrift: **16.06.93**

(51) Int. Cl.5: **C08G 77/58**, B01J 31/00, C07F 7/14

(21) Anmeldenummer: **87117054.4**

(22) Anmeldetag: **19.11.87**

(54) **Rhodiumhaltige Organopolysiloxan-Ammoniumverbindungen, Verfahren zu ihrer Herstellung und Verwendung.**

(30) Priorität: **22.12.86 DE 3643894**

(43) Veröffentlichungstag der Anmeldung:
**27.07.88 Patentblatt 88/30**

(45) Bekanntmachung des Hinweises auf die Patenterteilung:
**16.06.93 Patentblatt 93/24**

(84) Benannte Vertragsstaaten:
**AT BE CH DE ES FR GB IT LI NL SE**

(56) Entgegenhaltungen:
**DE-A- 3 029 599**
**DE-A- 3 120 195**
**DE-A- 3 131 854**
**DE-A- 3 404 702**
**US-A- 4 390 729**

**Advances in Organometallic Chemistry, Band 17, 1979, Seiten 255-267**

(73) Patentinhaber: **Degussa Aktiengesellschaft**
**Weissfrauenstrasse 9**
**W-6000 Frankturt am Main 1(DE)**

(72) Erfinder: **Panster, Peter, Dr.**
**Im Lochseif 8**
**W-6458 Rodenbach(DE)**
Erfinder: **Gradl, Robert**
**Neuwiesenstrasse 25**
**W-8755 Alzenau(DE)**

EP 0 275 399 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft neue Rhodium-haltige Organopolysiloxan-Ammoniumverbindungen, bei denen das komplexe Rhodium-haltige Anion über eine ionische Bindung an die Organopolysiloxan-Matrix gebunden ist. Die in Wasser und organischen Lösungsmitteln unlöslichen Verbindungen stellen wertvolle neue Katalysatorsysteme dar, die anstelle von homogenen Katalysatoren insbesondere bei Carbonylierungsreaktionen eingesetzt werden können und dabei sehr gute Eigenschaften zeigen. Im Vergleich zu entsprechenden homogenen Katalysatoren besitzen die erfindungsgemäßen Katalysatoren jedoch den Vorteil, daß sie sich leicht abtrennen und recyclieren lassen. Die Erfindung betrifft daneben Verfahren zur Herstellung der neuen metallhaltigen Organoplysiloxan-Ammoniumverbindungen.

Der Einsatz homogener Katalysatoren in der Technik ist häufig mit den Problemen der Katalysatorabtrennung und -recyclierung, der Rückgewinnung des meist wertvollen Metalls und der häufig nur kurzen Standzeit der Katalysatoren verbunden. Um diese Nachteile zu vermeiden und die Vorteile homogener Katalysatoren, das sind insbesondere die hohe Aktivität und Selektivität, mit den bekannten Vorzügen heterogener Katalysatoren zu kombinieren, wurden weltweit Bemühungen zur Entwicklung heterogenisierbarer homogener Katalysatoren unternommen. Der Stand der Technik auf diesem Gebiet ist bereits in mehreren Übersichtsartikeln zusammengefaßt, z. B. durch D.D. Whitthurst in CHEMTECH, Jan. 1980, S. 44 oder R.H. Grubbs in CHEMTECH, Aug. 1977, S. 5 oder D.C. Bailey und S.H. Langer in Chem. Rev. 81, 2, 109 (1981).

Als Trägermaterialien wurden hierbei in der Regel organische Polymere, wie z. B. Polystyrol, verwendet. Diese weisen jedoch im allgemeinen keineswegs die Qualitäten auf, die gute Katalysatorträger auszeichnen sollten. Sie besitzen nämlich keine feste Struktur, so daß die physikalischen Eigenschaften stark von äußeren Parametern, wie Druck, Temperatur und Lösungsmittel abhängen. Ein Schwellen der Träger im verwendeten Solvens ist stets notwendig, um ein Vordringen der Reaktanten zu den Katalysezentren zu ermöglichen und die Reaktionsgeschwindigkeit nicht diffusionskontrolliert werden zu lassen. Die hohe Mobilität der Matrix gestattet auch das Zusammenkommen fixierter Metalleinheiten, so daß eine unerwünschte Bildung katalytisch inaktiver Mehrkernkomplexe ermöglicht wird. Darüber hinaus kann es auch passieren, daß sich die polymere Matrix unerwünschterweise in dem verwendeten Reaktionsmedium auflöst.

Anorganische Polymersysteme, wie z. B. Kieselsäuren, Kieselgele oder Aluminiumoxid, eignen sich von den physikalischen Eigenschaften her generell besser als Katalysatorträger. Sie besitzen jedoch durchwegs einen gravierenden Nachteil insofern, als die Anzahl der funktionellen Gruppen, über die eine Fixierung von Metallverbindungen vollzogen werden kann, relativ gering ist.

Vor kurzer Zeit konnten, wie in den deutschen Offenlegungsschriften 30 29 599 und 31 31 954 beschrieben, Katalysatorsysteme entwickelt werden, bei denen Metallverbindungen über kovalente Donor-Akzeptor-Bindungen an Trägersysteme fixiert sind, die aus unlöslichen Donargruppen-haltigen Organopolysiloxanen bestehen und die guten Eigenschaften anorganischer Träger besitzen, nicht aber deren Nachteile. Darüber hinaus läßt sich die Matrix dieser neuen polymeren Träger in breitem Umfang modifizieren und den gestellten Anforderungen anpassen. Auf analoger Basis wurden inzwischen auch Katalysatorsysteme entwickelt (DE-OS 34 04 702), bei denen komplexe Platin- und/oder Palladium-Anionen über ionische Bindungen an Ammoniumgruppen-haltige Organopolysiloxan-Träger gebunden sind. Die Herstellung dieser Ammoniumgruppenhaltigen Organopolysiloxane ist in der deutschen Offenlegungsschrift 31 20 195 beschrieben.

Der Erfindung liegt die Aufgabe zugrunde, die Zahl der mit diesen Katalysatorsystemen durchzuführenden chemischen Reaktionen zu vergrößern und Katalysatoren auf Organopolysiloxan-Basis zu entwickeln, mit denen insbesondere Carbonylierungsreaktionen durchgeführt werden können. Bekanntlich eignen sich hierfür vor allem komplexe Rhodiumverbindungen, wobei die katalytisch aktive Komponente bekanntlich stets ein anionischer Rhodiumkomplex ist (vgl. D. Forster, Advances in Organometallic Chemistry 17, 255 (1979) ), der sich in Anwesenheit von Kohlenmonoxid und Jodid bildet und die Formel $[Rh(CO)_2J_2]^-$ besitzt. Wie der Fachmann weiterhin weiß, laufen Carbonylierungsreaktionen, z. B. die Carbonylierung von Methanol zu Essigsäure oder die Carbonylierung von Dimethylether zu Essigsäureanhydrid, nur in Gegenwart von Jodid mit ausreichender Geschwindigkeit ab. Das Jodid wird bevorzugt in Form von Alkyljodid, elementarem Jod oder Jodwasserstoffsäure zugesetzt. Alkalijodide sind grundsätzlich ebenfalls einsetzbar, sind aber generell nicht so wirkungsvoll.

Die vorstehend beschriebene Aufgabe wird erfindungsgemäß durch neue temperaturbeständige Rhodium-haltige Organopolysiloxan-Ammoniumverbindungen gelöst, die dadurch gekennzeichnet sind, daß sie aus Einheiten der allgemeinen Formel

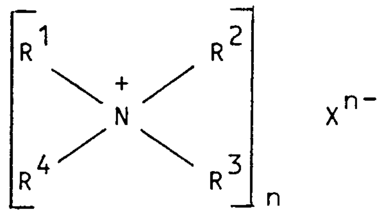

(1)

aufgebaut sind, in der $R^1$, $R^2$ und $R^3$ für eine Gruppe der allgemeinen Formel

$R^5 - SiO_{3/2}$ (2)

stehen, in der $R^5$ für eine Alkylengruppe mit 1 bis 10 C-Atomen, eine Cycloalkylengruppe mit 5,7 oder 8 C-Atomen oder für Einheiten

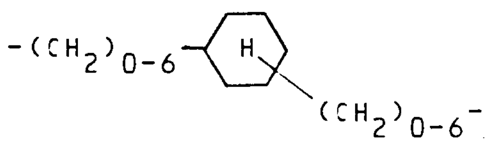

bzw.

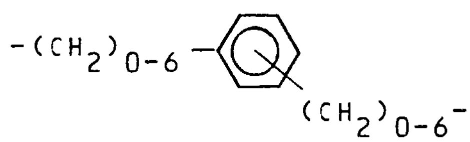

steht, wobei $R^1$, $R^2$ und $R^3$ gleich oder verschieden sind und die freien Valenzen der Sauerstoffatome entweder durch Siliciumatome weiterer Gruppen der Formel (2) und/oder durch vernetzende Brückenglieder der Formeln

$SiO_{4/2}$ oder $SiR'O_{3/2}$ oder $SiR'_2 O_{2/2}$ bzw.

$TiO_{4/2}$ oder $TiR'O_{3/2}$ oder $TiR'_2 O_{2/2}$ bzw.

$AlO_{3/2}$ oder $AlR'O_{2/2}$

abgesättigt sind, wobei $R'$ für eine Methyl- oder Ethylgruppe steht, auf ein Siliciumatom in (2) 0 bis 10 Brückenatome Silicium, Titan und Aluminium kommen,

$R^4$ für Wasserstoff, eine 1 bis 8 C-Atome enthaltende lineare oder verzweigte Alkylgruppe, eine 5 bis 8 C-Atome enthaltende Cycloalkyl- oder die Benzylgruppe und $X^{n-}$ für $[Rh(CO)_2J_2]^-$, $[RhCl_6]^{3-}$ oder $[RhCl_5]^{2-}$ und für gegebenenfalls daneben vorliegendes $Cl^-$, $Br^-$, $J^-$ steht.

Es wurde gefunden, daß $R^5$ eine lineare oder verzweigte Alkylengruppe sein kann, ohne daß erhebliche stoffliche Unterschiede im Endprodukt auftreten.

Im Polymer können neben den komplexen Rhodiumeinheiten Chlorid, Bromid oder Jodid, einzeln oder gemischt, vorliegen.

Günstig ist, wenn das molare Verhältnis zwischen den Anionentypen $[Rh(CO)_2J_2]^-$, $[RhCl_6]^{3-}$ oder $[RhCl_5]^{2-}$ und den Halogenanionen im Bereich von 1 : 1 bis 1 : 100 liegt.

Der Einbau von Silicium-, Titan- oder Aluminium-haltigen Vernetzern dient einer Steuerung der Rhodium- und Halogenid-Dichte im Feststoff, der Porosität (mit der Einfluß auf die Selektivität des Katalysators genommen werden kann) und einer Steuerung der allgemeinen stofflichen Eigenschaften.

Daneben kann der Vernetzer auch die Funktion eines sog. Aktivators oder Cokatalysators übernehmen.

Besonders bevorzugt sind vom Gesichtspunkt der thermischen Stabilität und der Inertness gegenüber chemischen Angriffen (insbesondere durch Basen) sowie der Zugänglichkeit der monomeren Ausgangsmaterialien die polymeren Ammoniumverbindungen nach Formel (1), wobei $R^1$, $R^2$ und $R^3$ miteinander identisch sind und $R^4$ gleich Methyl ist.

Besondere Vorteile bezüglich der Verfügbarkeit der Ausgangsmaterialien und der stofflichen Eigenschaften der polymeren Rhodium-haltigen Organopolysiloxan-Ammoniumverbindungen liegen bei Verbindungen, die aus Einheiten der Formel

$$\left[(H_3C)\overset{+}{N}(CH_2CH_2CH_2SiO_{3/2})_3\right]_n \; X^{n-}$$

aufgebaut sind, in der $X^{n-}$ denselben Bedeutungsumfang wie in Formel (1) hat und ansonsten dieselben Verhältnisse wie bei Formel (1) vorliegen.

Im Hinblick auf den Einsatz als Carbonylierungskatalysator ist eine besonders wichtige aktive Komponente die Polymereinheit der Formel

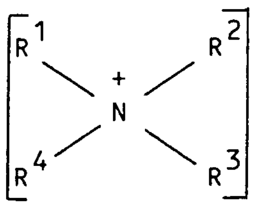

$$\left[Rh(CO)_2J_2\right]^-$$

wobei $R^1$ - $R^4$ denselben Bedeutungsumfang wie in Formel (1) haben.

Die erfindungsgemäßen Rhodium-haltigen Organopolysiloxan-Ammoniumverbindungen können nach verschiedenen Verfahrenskonzepten hergestellt werden.

Ein Verfahren, das zunächst eine Vorstufe der betreffenden Verbindungen liefert, ist dadurch gekennzeichnet, daß eine in der DE-OS 31 20 195 bzw. in der DE-PS 31 20 214 beschriebene Organopolysiloxan-Ammoniumverbindung der Formel

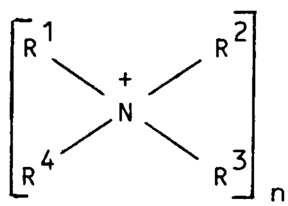

$$X^{n-}$$

in der $R^1$ - $R^4$ denselben Bedeutungsumfang wie in Anspruch 1 haben, und die freien Valenzen der Sauerstoffatome entweder durch Siliciumatome weiterer Gruppen der Formel

$R^5 - SiO_{3/2}$,

wobei $R^5$ dieselbe Bedeutung wie in Anspruch 1 hat, und/oder durch vernetzende Brückenglieder der Formeln
$SiO_{4/2}$ oder $SiR'O_{3/2}$ oder $SiR'_2O_{2/2}$ bzw.
$TiO_{4/2}$ oder $TiR'O_{3/2}$ oder $TiR'_2O_{2/2}$ bzw.
$AlO_{3/2}$ oder $AlR'O_{2/2}$
abgesättigt sind, wobei R' für eine Methyl- oder Ethylgruppe steht, auf ein Siliciumatom in (2) 0 bis 10 Brückenatome Silicium, Titan und Aluminium kommen und
$X^{n-}$ für $Cl^-$, $Br^-$ oder $J^-$ steht,
mit stöchiometrischen, unterschüssigen oder überschüssigen Mengen der gegebenenfalls kristallwasserhaltigen Verbindungen
$Na_3RhCl_6$, $K_3RhCl_6$, $(NH_4)_3RhCl_6$, $(NH_4)_2RhCl_5$
oder der entsprechenden freien Säuren in Wasser oder einem polaren organischen Lösungsmittel, welches die Rhodiumverbindungen wenigstens teilweise löst, zum gegenseitigen teilweisen oder vollständigen Austausch der Anionen nach dem statischen oder dynamischen Prinzip umsetzt, den Rhodium-haltigen Feststoff gegebenenfalls von der flüssigen Phase abtrennt, und jeweils gegebenenfalls in beliebiger

Reihenfolge wäscht, bei Raumtemperatur bis 200° C unter Schutzgas oder Vakuum trocknet, klassifiziert sowie bei 150 - 250° C unter Schutzgas oder im Vakuum tempert.

Unter dem dynamischen Prinzip versteht man eine gerührte Suspension, während die statische Verfahrensweise ein Festbett aus dem Polysiloxan vorsieht.

Eine Temperung des Produkts erweist sich im Hinblick auf eine Erhöhung der Stabilität der Matrix oft als vorteilhaft. Sie besteht in einer Temperaturbehandlung über einen Zeitraum von mindestens einer Stunde bis zu vier Tagen bei den erwähnten Bedingungen. Der Rhodium-haltige Feststoff kann aber auch direkt nach dem Austausch noch wasser- oder lösungsmittelfeucht der weiteren Verwendung zugeführt werden.

Ein bevorzugtes Reaktionsmedium, in dem die Einführung des komplexen Rhodium-Amins erfolgen kann, sind im Prinzip alle polaren Lösungsmittel, die in der Lage sind, die vorstehend genannten Rhodium-Ausgangsverbindungen wenigstens teilweise zu lösen. Derartige Lösungsmittel sind z. B. Wasser, Methanol, Ethanol, n- und i-Propanol, n- und i-Butanol, Aceton, Dimethylformamid, Dimethylsulfoxid, Hexamethylphosphorsäuretriamid, aliphatische oder aromatische Nitroverbindungen, Nitrile oder Gemische daraus. Besonders bevorzugt sind die genannten Alkohole.

Geeignete Temperaturen, bei der dieser Austausch durchgeführt werden kann, liegen im Bereich von 20 bis 200° C, wobei ein gegebenenfalls angewendeter Überdruck der Summe der Partialdrucke der Komponenten der Reaktionsmischung bei der jeweiligen Temperatur entspricht.

Die Wahl der stöchiometrischen Verhältnisse zwischen der eingesetzten Organopolysiloxan-Ammoniumverbindung und der Rhodiumverbindung richtet sich danach, ob eine Sättigung oder nur eine Teilbelegung des Feststoffs mit dem komplexen Rhodiumanion erfolgen soll, wodurch natürlich Einfluß auf die Eigenschaften des erhaltenen Katalysators genommen werden kann.

Nach zwei weiteren erfindungsgemäßen Verfahren können insbesondere Polymere hergestellt werden, welche die bei Carbonylierungen katalytisch aktiven Einheiten nach Formel

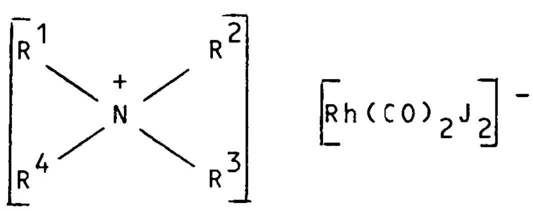

enthalten. Wie der Fachmann weiß, kann das komplexe Rhodiumanion $[Rh(CO)_2J_2]^-$ nur unter speziellen Bedingungen gebildet und stabilisiert werden. Das eine Verfahren geht aus von einer gemäß vorstehend abgehandeltem Verfahren gewonnenen Organopolysiloxan-Ammoniumverbindung der Formel (1), wobei $X^{n-}$ für $[RhCl_6]^{3-}$ oder $[RhCl_5]^{2-}$ und gegebenenfalls für $Cl^-$, $Br^-$ oder $J^-$ steht,und setzt diese bei einer Temperatur von 60 - 200° C in Gegenwart von Wasser, eines Alkyljodids mit 1 - 10 C-Atomen, von elementarem Jod oder Jodwasserstoffsäure in einem polaren Lösungsmittel mit CO bei einem Gesamtdruck von ca. 1 bar bis ca. 200 bar um, trennt dann den Rhodium-haltigen Feststoff von der flüssigen Phase ab, wäscht gegebenenfalls, trocknet gegebenenfalls bei Raumtemperaturen bis 200° C, klassifiziert und tempert bei Temperaturen von 150 - 250° C unter Schutzgasatmosphäre oder im Vakuum. Das Rhodiumhaltige Polysiloxan kann aber auch direkt noch lösungsmittelfeucht der weiteren Verwendung zugeführt und einige der genannten Maßnahmen können auch unterbleiben oder in abgewandelter Reihenfolge durchgeführt werden.

Die Umwandlung des an die Ammoniumpolysiloxan-Matrix gebundenen komplexen Rh(III)-Anions in das fixierte CO-haltige Rh(I)-Anion vollzieht sich unter diesen Bedingungen relativ rasch und kann praktisch auch gleichzeitig in dem vorstehend beschriebenen Verfahren zur Einbringung der Rh-Komponente stattfinden. Diese CO-Umsetzung ist eine an sich schon bekannte Reaktion und z. B. in Inorganic Synthesis 8, 211 (1966) beschrieben. Sie kann z. B. im Fall der Verwendung von $RhCl_6{}^{3-}$ durch folgende Gleichung beschrieben werden:

$$RhCl_6{}^{3-} + 2J^- + 3CO \rightarrow [Rh(CO)_2J_2]^- + 4Cl^- + COCl_2 \qquad (I)$$

Obwohl grundsätzlich alle der vorstehend genannten polaren Lösungsmittel eingesetzt werden können, sind vor allem die niederen Alkohole mit 1 - 4 C-Atomen und unter diesen insbesondere Methanol bevorzugt. Analoges gilt auch für die Art des verwendeten Alkyljodids. Auch hier können grundsätzlich alle Verbindungen mit 1 - 10 C-Atomen verwendet werden. Es werden jedoch vor allem aus Gründen der Löslichkeit die

niederen Derivate mit 1 - 4 C-Atomen und unter diesen vor allem Methyljodid bevorzugt. In bezug auf die stöchiometrischen Verhältnisse gilt, daß mindestens eine ausreichende Menge Jod in den genannten Formen anwesend sein muß, um das komplexe Rhodium-Carbonyl-Anion auszubilden und die im Ammoniumpolysiloxan noch vorhandenen $Cl^-$ bzw. $Br^-$-Ionen gegen $J^-$ auszutauschen. In der Praxis wird jedoch eine mehrfache Menge Jodid eingesetzt. Entsprechendes gilt auch für die eingesetzte Menge Wasser, die zur Freisetzung des Jodids aus dem Alkyljodid gemäß der Gleichung (II)

$$RJ + H_2O \rightleftarrows ROH + HJ \qquad (II)$$

benötigt wird. Auch hier wird eine mehrfache Menge in bezug auf das Alkylhalogenid verwendet.

Nach einem weiteren erfindungsgemäßen Verfahren erfolgt die Ausbildung des komplexen Rhodiumanions $[Rh(CO)_2J_2]^-$ zunächst in Lösung (vgl. D. Forster, Advances in Organometallic Chemistry 17, 255 (1979) ) und gleichzeitig oder anschließend dessen Fixieren an die Ammoniumpolysiloxan-Matrix über einen Anionenaustausch.

Dazu wird eine zumindest teilweise in einem polaren Lösungsmittel gelöste, gegebenenfalls kristallwasserhaltige Rhodiumverbindung der Formel $Na_3RhCl_6$, $K_3RhCl_6$, $(NH_4)_3RhCl_6$, $(NH_4)_2RhCl_5$, $RhY_3$, $Rh(NO_3)_3$, $Rh(acac)(CO)_2$, $RhH(CO)(PPh_3)_3$, $RhCl(As\ Ph_3)_3$, $RhCl(PPh_3)_3$, $[RhY(dien)]_2$, $[RhY(C_2H_4)_2]_2$, $[RhY(CO)_2]_2$, $[Rh(OAc)_2]_2$, $Rh(acac)_3$, $RhCl(CO)(PPh_3)_2$, wobei

| | | |
|---|---|---|
| Y | = | Chlor, Brom, Jod |
| dien | = | Cyclooctadien, Norbornadien |
| Ph | = | Phenyl |
| OHc | = | Acetat |
| acac | = | Acetylacetonat, |

bei 60 - 200° C, in Gegenwart von Wasser, eines Alkyljodids mit 1 - 10 C-Atomen, oder Jod oder Jodwasserstoffsäure und in Gegenwart eines Ammoniumpolysiloxans der Formel

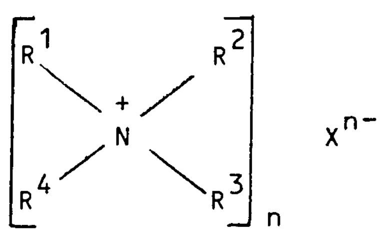

in der $R^1$ - $R^4$ und $X^{n-}$ dieselbe Bedeutung wie in Anspruch 1 haben und $X^{n-}$ nur für Chlorid, Bromid oder Jodid steht,
mit CO bei einem Gesamtdruck von ca. 1 bar bis ca. 200 bar umgesetzt, bis das entstehende Anion $[Rh(CO)_2J_2]_2^-$ in das Ammoniumpolysiloxan teilweise oder vollständig eingebracht ist, trennt den Feststoff von der flüssigen Phase ab, wäscht gegebenenfalls, trocknet bei Raumtemperatur bis 200° C,gegebenenfalls unter Schutzgasatmosphäre oder im Vakuum, klassifiziert und tempert unter Schutzgasatmosphäre oder im Vakuum bei 150 - 250° C. Auch bei dieser Variante kann das modifizierte Rhodium-haltige Polysiloxan direkt noch lösungsmittelfeucht der weiteren Verwendung zugeführt und einige der genannten Maßnahmen können auch unterbleiben oder in abgewandelter Reihenfolge durchgeführt werden.

Grundsätzlich sind auch noch weitere verwandte Rhodiumverbindungen (z. B. mit Calcium oder Magnesium als Kation) als Ausgangsmaterial bei dem letztgenannten Verfahren einsetzbar, doch können hier nur die einfachsten und am besten zugänglichen Vertreter behandelt werden.

Von den physikalischen Eigenschaften her gesehen, verhalten sich die erfindungsgemäßen Rhodium-haltigen Organopolysiloxan-Ammoniumverbindungen wie spezielle Kieselgele, die je nach Vorbehandlung spezifische Oberflächen von 1 bis 1000 $m^2/g$ und Teilchengrößendurchmesser von ca. 1 $\mu m$ bis 1 cm besitzen. Die thermische Stabilität liegt teilweise deutlich über 250° C.

Die erfindungsgemäßen Rhodium-haltigen Organopolysiloxan-Ammoniumverbindungen können gemäß einem weiteren Gegenstand der Erfindung als wertvolle Katalysatoren für Carbonylierungen verwendet werden. So können z. B. mit Hilfe dieser Katalysatoren Methanol zu Essigsäure oder Essigsäuremethylester und Dimethylether zu Essigsäureanhydrid umgesetzt werden. Dies geschieht bei Temperaturen von 100 - 250° C und Gesamtdrucken von 10 bis 300 bar in hoher Selektivität und mit guter Reaktionsgeschwindigkeit.

Die Erfindung wird nachfolgend anhand von Ausführungsbeispielen unter Berücksichtigung der grundsätzlich wichtigsten Ausgangsstoffe näher erläutert.

Beispiel 1

25 g einer polymeren Ammoniumverbindung, bestehend aus Einheiten der Formel

$[(H_3C)N(CH_2CH_2CH_2SiO_{3/2})_3]^+J^-$

wurden in 200 ml Methanol suspendiert, in denen vorher 2,64g $Na_3RhCl_6 \cdot 12H_2O$ gelöst worden waren. Die Suspension wurde in einen 500 ml Rührautoklaven überführt und hier auf 100° C aufgeheizt. Die Mischung wurde 4 h bei dieser Temperatur gerührt, abgekühlt und dann der Feststoff über ein Druckfilter abfiltriert. Es wurde noch 2 × mit je 100 ml Methanol nachgewaschen und dann der Feststoff 4 h bei 100° C und 20 h bei 150° C unter $N_2$-Atmosphäre getrocknet. Die Auswaage an dem dunkelroten Produkt betrug 25,5 g. Eine durchgeführte Analyse ergab einen Rh-Gehalt von 1,55 %, was auf eine fast 90 %ige Aufnahme der eingesetzten Menge an $RhCl_6^{3-}$ schließen läßt.

In dem Produkt sind demzufolge in der entsprechenden Menge Polymereinheiten der Formel

$[(H_3C)N(CH_2CH_2CH_2SiO_{3/2})_3]_3^{3+}RhCl_6^{3-}$

enthalten.

Beispiel 2

20 g einer polymeren Ammoniumverbindung, bestehend aus Einheiten der Formel

$[(H_3C)N(CH_2CH_2CH_2SiO_{3/2})_3]^+Cl^- \cdot 3SiO_2$

wurden in 150 ml entsalztem $H_2O$ suspendiert, in denen vorher 3,5 g $(NH_4)_2RhCl_5 \cdot H_2O$ gelöst worden waren. Die Suspension wurde in einem 500 ml Dreihalskolben mit KPG-Rührer und Rückflußkühler auf 80° C erhitzt und 4 h bei dieser Temperatur gerührt. Anschließend wurde die Suspension abgekühlt, der Feststoff abfiltriert und 2 × mit je 100 ml entsalztem Wasser gewaschen. Nach 12-stündiger Trocknung bei 120° C und 12-stündiger Temperung bei 150° C unter $N_2$-Atmosphäre wurden 21,6 g an Produkt erhalten. Eine Analyse dieses Produkts ergab einen Rh-Gehalt von 3,9 %, was auf eine angenähert 80 %ige Aufnahme des angebotenen Rhodiums schließen läßt.

Beispiel 3

10 g einer polymeren Ammoniumverbindung, bestehend aus Einheiten der Formel

$[(n\text{-}C_3H_7)N(CH_2CH_2CH_2SiO_{3/2})_3]^+Cl^-$

wurden in 150 ml Ethanol suspendiert. Diese Suspension wurde mit 0,3 g $Na_3RhCl_6 \cdot 12H_2O$ versetzt, anschließend in einen 500 ml Rührautoklaven überführt und 3 h bei 120° C gerührt. Nach dem Abkühlen auf Raumtemperatur wurde ein Feststoff abfiltriert, mit 2 × 50 ml Ethanol gewaschen, dann 5 h bei 100° C getrocknet und 24 h bei 180° C unter Stickstoff getempert. Das getrocknete Material wurde anschließend über ein Sieb mit einer Maschenweite von 50 µm abgesiebt. Zurück blieben 9,5 g des gewünschten Produkts mit einem Rh-Gehalt von 0,35 %.

Beispiel 4

25 g einer polymeren Ammoniumverbindung, bestehend aus Einheiten der Formel

$HN[(CH_2)_3SiO_{3/2}]_3^+Cl^- \cdot (CH_3)_2SiO_{2/2}$

mit einer Korngröße von 0,1 - 0,6 mm wurden zunächst in 100 ml Methanol eingerührt. Nach einer halben Stunde Einrühren wurde der Feststoff in eine Säule mit einem Innendurchmesser von 20 mm überführt. Die Säule wurde innerhalb von 2 h mit einer 60° C heißen Lösung von 1,2 g $(NH_4)_3RhCl_6$ in 100 ml Methanol

beschickt. Anschließend wurde der Feststoff 2 × mit 100 ml Methanol gewaschen, dann aus der Säule in eine Schale überführt und 8 h bei 100° C unter $N_2$-Atmosphäre getrocknet. Eine an dem Feststoff (25,5 g) durchgeführte Rh-Analyse ergab einen Wert von 1,05 %, was auf eine über 80 %ige Aufnahme des eingesetzten Rhodiums schließen läßt.

Beispiel 5

12 g einer polymeren Ammoniumverbindung, bestehend aus Einheiten der Formel

$(H_3C)N[(CH_2)_8SiO_{3/2}]_3{}^+J^- \cdot TiO_2$

wurden analog zu Beispiel 3 mit 0,5 g $Na_3RhCl_6 \cdot 12H_2O$ umgesetzt. Nach 6-stündiger Trocknung bei 100° C und 10-stündiger Temperung bei 200° C unter $N_2$-Atmosphäre wurden 12,2 g Produkt mit einem Rh-Gehalt von 0,65 % erhalten.

Beispiel 6

15 g einer Organopolysiloxan-Ammoniumverbindung, bestehend aus Einheiten der Formel

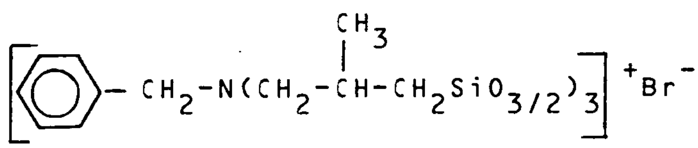

wurden analog zu Beispiel 1 mit 0,8 g $(NH_4)_3RhCl_6$ in 100 ml Methanol umgesetzt und aufgearbeitet. Es wurden 15,2 g Produkt mit einem Rh-Gehalt von 1,40 % erhalten. Daraus kann geschlossen werden, daß im Produkt jetzt eine entsprechende Menge Polymereinheiten der Formel

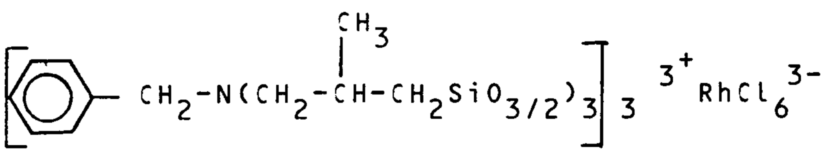

enthalten waren.

Beispiel 7

20 g einer Organopolysiloxan-Ammoniumverbindung, bestehend aus Einheiten der Formel

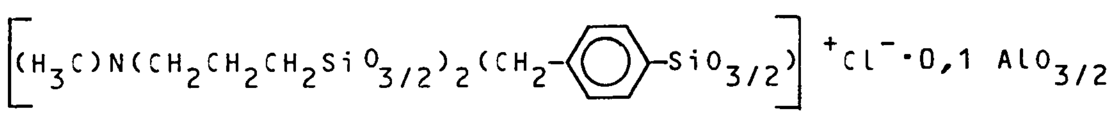

wurden mit 0,2 g $H_3RhCl_6$, gelöst in 60 ml 1n HCl-Lösung versetzt. Die Suspension wurde 5 h bei ca. 100° C in einem 250 ml Glaskolben mit KPG-Rührer und Rückflußkühler gerührt, anschließend über eine Saugnutsche abfiltriert und mit insgesamt 300 ml entsalztem Wasser säurefrei gewaschen. Nach 10-stündiger Trocknung bei 130° C wurden 20,2 g Produkt mit einem Rh-Gehalt von 0,28 % erhalten.

Beispiel 8

10,0 g der in Beispiel 1 hergestellten Rhodium-haltigen Organopolysiloxan-Ammoniumverbindung mit einem Rh-Gehalt von 1,55 % wurden in 100 ml Methanol suspendiert. Die Suspension wurde mit 10 ml $CH_3J$ sowie mit 5 ml $H_2O$ versetzt und dann in einen 500 ml Rührautoklaven mit Tantal-Auskleidung überführt. Nach zweimaligem Spülen mit $N_2$ wurden 20 bar CO aufgepreßt und die Mischung zunächst auf

120° C und nach 2 h auf 150° C aufgeheizt. Nach 5-stündigem Rühren bei 150° C und zweimaligem Nachpressen des verbrauchten CO auf jeweils 40 bar Gesamtdruck wurde abgekühlt, der Autoklav entspannt und der Feststoff abfiltriert. Nach zweimaligem Waschen mit je 50 ml Methanol wurde der Feststoff 8 h bei 120° C unter $N_2$-Atmosphäre getrocknet. Es wurden 9,8 g Produkt erhalten, das jetzt einen Rhodium-Gehalt von 1,45 % aufwies. Das IR-Spektrum zeigte 2 Banden bei ca. 2065 und 1990 $cm^{-1}$, wie sie für das Anion $[Rh(CO)_2J_2]^-$ typisch sind.

Beispiel 9

10 g der in Beispiel 9 hergestellten Rhodium-haltigen Organopolysiloxan-Ammoniumverbindung mit einem Rh-Gehalt von 3,9 % wurden in 100 ml i-Propanol suspendiert. Das Gemisch wurde mit 20 g 57 %iger Jodwasserstoffsäurelösung versetzt und in einen 500 ml Rührautoklaven mit Tantal-Auskleidung überführt. Nach zweimaligem Spülen mit $N_2$ wurden 10 bar CO aufgepreßt und die Mischung zunächst auf 130° C und nach 3 h auf 160° C aufgeheizt. Der Gesamtdruck wurde durch Nachpressen von CO bei 30 bar gehalten. Nach 4 h Rührdauer wurde abgekühlt, der Autoklav entspannt und der Feststoff abfiltriert. Es wurde 3 × mit je 100 ml i-Propanol gewaschen und dann 12 h bei 120° C/100 mbar getrocknet. Es wurden 11,0 g Produkt mit einem Rh-Gehalt von 3,2 % erhalten, dessen IR-Spektrum wiederum die zwei typischen CO-Valenzschwingungen bei ca. 2065 und 1990 $cm^{-1}$ aufwies.

Beispiel 10

Aus 10 g der in Beispiel 4 hergestellten Rhodium-haltigen polymeren Ammoniumverbindung wurden analog Beispiel 9 unter Verwendung von Wasser als Reaktionsmedium 10,2 g Produkt erhalten, in dem gemäß IR-Spektrum das Anion $[Rh(CO)_2J_2]^-$ enthalten war.

Beispiel 11

26 g einer Organopolysiloxan-Ammoniumverbindung, bestehend aus Einheiten der Formel

$$[(H_3C)N(CH_2CH_2CH_2SiO_{3/2})_3]^+J^-$$

wurden in 200 ml $CH_3OH$ suspendiert, in denen vorher 1095 mg $RhCl_3 \cdot 3H_2O$ gelöst worden waren. Der Suspension wurden noch 75 ml $CH_3J$ und 20 ml entsalztes Wasser zugesetzt, ehe sie in einen 500 ml Autoklaven überführt wurde. Es wurden 50 bar CO aufgepreßt,dann wurde auf 120° C aufgeheizt und 6 h bei dieser Temperatur gerührt, während der Gesamtdruck bei 50 bar gehalten wurde. Unter permanentem CO-Verbrauch wurde anschließend auf 150° C und nach weiteren 2 h auf 180° C aufgeheizt. Nachdem noch 2 h bei 180° C gerührt worden war, wurde abgekühlt, der Reaktor entspannt und der dunkelrote Feststoff abfiltriert. Nach zweimaligem Waschen mit je 100 ml $CH_3OH$ wurde der Feststoff 4 h bei 100° C und 16 h bei 150° C unter Stickstoffatmosphäre getrocknet. Es wurden 25,8 g Produkt mit einem Rh-Gehalt von 1,19 % erhalten, dessen IR-Spektrum die typischen CO-Valenz-Schwingungsbanden für das $[Rh(CO)_2J_2]^-$-Anion zeigte.

Beispiel 12

30 g einer polymeren Ammoniumverbindung, bestehend aus Einheiten der Formel

$$[(n\text{-}C_3H_7)N(CH_2CH_2CH_2SiO_{3/2})_3]^+J^- \cdot SiO_2$$

wurden in 130 ml Methanol suspendiert. Die Suspension wurde mit 20 ml $H_2O$, 1,25 g $RhJ_3$ und 20 g $J_2$ versetzt. Nach Überführung in einen 500 ml-Rührautoklaven mit Tantal-Auskleidung wurde der Reaktor mit 10 bar CO beaufschlagt und auf 100° C aufgeheizt. Der Gesamtdruck im Reaktor wurde durch Nachdosieren von CO bei 30 bar gehalten. Es wurde 4 h bei dieser Temperatur gerührt, dann die Temperatur auf 130° C und nach weiteren 3 h auf 160° C gesteigert und nochmals 2 h gerührt. Dann wurde auf Raumtemperatur abgekühlt und der Reaktor entspannt. Der dunkelrote, fast schwarze Feststoff wurde abfiltriert, 3 × mit je 50 ml Methanol gewaschen und dann 4 h bei 100° C und 16 h bei 160° C getrocknet. Es wurden 30,2 g Produkt mit einem Rh-Gehalt von 0,61 % erhalten. Das IR-Spektrum zeigt die typischen Banden des Anions $[Rh(CO)_2J_2]^-$.

Beispiel 13

Aus 20 g einer polymeren Ammoniumverbindung, bestehend aus Einheiten der Formel

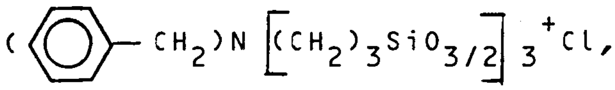

1,5 g $Na_3RhCl_6 \cdot 12H_2O$, 50 ml $CH_3J$, 10 ml $H_2O$ und 150 ml $CH_3OH$ wurden analog Beispiel 11, 21,5 g Produkt mit einem Rh-Gehalt von 1,01 % erhalten, wobei das IR-Spektrum die beiden typischen CO-Banden des Anions $[Rh(CO)_2J_2]^-$ aufwies.

Beispiel 14

Aus 15 g einer polymeren Ammoniumverbindung, bestehend aus Einheiten der Formel

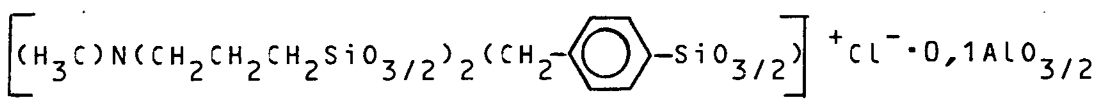

und 0,5 g $Rh_2O_3$, 50 ml $C_2H_5J$, 10 ml $H_2O$ und 200 ml Ethanol wurden analog Beispiel 11, 16,9 g Produkt mit einem Rh-Gehalt von 0,78 % erhalten.

Beispiel 15

Aus 20 g einer polymeren Ammoniumverbindung, bestehend aus Einheiten der Formel

$[(i\text{-}H_7C_3)N(CH_2CH_2CH_2SiO_{3/2})_3]^+J^- \cdot 3SiO_2$

2,0 g $RhCl(PPh_3)_3$, 30 g $n\text{-}C_3H_7J$, 10 ml $H_2O$ und 200 ml $n\text{-}C_3H_7OH$ wurden analog Beispiel 11 19,9 g Produkt mit einem Rhodiumgehalt von 0,8 % erhalten.

Beispiel 16

Aus 18 g einer polymeren Ammoniumverbindung, bestehend aus Einheiten der Formel

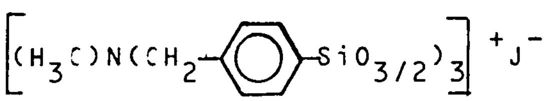

2,8 g $[RhCl(C_8H_{12})]_2$, 50 ml $CH_3J$, 20 ml $H_2O$ und 200 ml $CH_3OH$ wurden analog Beispiel 11 18,3 g Produkt mit einem Rhodiumgehalt von 2,6 % erhalten.

Beispiel 17

Aus 26 g einer polymeren Ammoniumverbindung, bestehend aus Einheiten der Formel

$[(H_3C)N(CH_2CH_2CH_2SiO_{3/2})_3]^+J^-$

1,0 g $[Rh(OAC)_2]_2 \cdot 2H_2O$, 50 g Benzyljodid, 10 ml $H_2O$ und 200 ml $CH_3OH$ wurden analog Beispiel 11 25,4 g Produkt mit einem Rh-Gehalt von 0,81 % erhalten.

Beispiel 18

10 g der nach Beispiel 1 hergestellten Rhodium-haltigen Organopolysiloxan-Ammoniumverbindung wurden in 300 ml Methanol suspendiert. Die Suspension wurde mit 18,7 ml $CH_3J$ sowie mit 5 ml $H_2O$ versetzt und dann in einem 1 l-Autoklaven mit Tantal-Auskleidung überführt. Nach zweimaligem Spülen des Autoklaven mit $H_2$ wurden 50 bar CO aufgepreßt und die Mischung zunächst auf 120° C und nach 2 h auf 150° C und nach wiederum 4 h auf 180° C.erhitzt. Während dieser Zeit wurde der Gesamtdruck durch Nachfüllen von CO bei 50 bar gehalten. Nach 16 h war fast keine Aufnahme von CO mehr feststellbar. Aus dem Reaktor wurden über ein Tauchrohr ca. 200 ml Flüssigkeit ausgetragen und dann wieder eine Mischung von 300 ml Methanol und 18,7 ml $CH_3J$ über eine Pumpe zudosiert. Die Reaktion wurde fortgesetzt und diesmal war nach 14 h fast keine CO-Aufnahme mehr feststellbar. Es wurden 350 ml Flüssigkeit aus dem Reaktor ausgetragen und wieder ein Gemisch von 300 ml Methanol und 18,7 ml $CH_3J$ zudosiert. Nach 13 h war fast keine CO-Aufnahme mehr feststellbar; der Reaktor wurde abgekühlt und dann sein gesamter Inhalt ausgetragen. Eine gaschromatographische Untersuchung der drei ausgetragenen Chargen ergab bei Nichtberücksichtigung der Jodidkomponenten folgende Zusammensetzungen:

1. Charge: 92 % Essigsäure, 6 % Essigsäuremethylester, 2 % $H_2O$ und $CH_3OH$.
2. Charge: 93 % Essigsäure, 6 % Essigsäuremethylester, 1 % $H_2O$ und $CH_3OH$.
3. Charge: 95 % Essigsäure, 4 % Essigsäuremethylester, 1 % $H_2O$ und $CH_3OH$.

Beispiel 19

5 g der in Beispiel 9 hergestellten Rhodium-haltigen Organopolysiloxan-Ammoniumverbindung wurden in einem Gemisch von 300 ml $CH_3OH$ und 18,7 ml $CH_3J$ suspendiert. Die Suspension wurde in einen 1 l-Rührautoklaven überführt. Nach zweimaligem Spülen des Autoklaven mit $N_2$ wurden 40 bar CO aufgepreßt und der Reaktor auf 180° C aufgeheizt. Es wurde wie in Beispiel 18 verfahren und nach jeweils 14 h, 13 h und 13 h Reaktionsdauer erfolgte der Austrag. Die 3 Chargen besaßen praktisch die gleichen Zusammensetzungen wie in Beispiel 18, d. h. jeweils Essigsäuregehalte von über 90 %.

Beispiel 20

Unter Einsatz von 5 g der nach Beispiel 16 hergestellten Rhodium-haltigen Organopolysiloxan-Ammoniumverbindung wurde gemäß der in Beispiel 19 praktizierten Verfahrensweise nach 18 h, 20 h und 18 h jeweils eine Charge Produkt ausgetragen. Die Chargen besaßen gemäß gaschromatographischer Analyse die folgenden Zusammensetzungen:

1. Charge: 94 % Essigsäure, 5 % Essigsäuremethylester, 1 % $H_2O$.
2. Charge: 95 % Essigsäure, 4 % Essigsäuremethylester, 1 % $H_2O$
3. Charge: 94 % Essigsäure, 5 % Essigsäuremethylester, 1 % $H_2O$.

## Patentansprüche

1. Rhodium-haltige Organopolysiloxan-Ammoniumverbindungen, **dadurch gekennzeichnet**, daß sie aus Einheiten der allgemeinen Formel

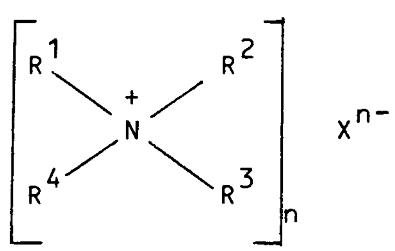

(1)

aufgebaut sind, in der $R^1$, $R^2$ und $R^3$ für eine Gruppe der allgemeinen Formel

$R^5 - SiO_{3/2}$ (2)

stehen, in der $R^5$ für eine Alkylengruppe mit 1 bis 10 C-Atomen, eine Cycloalkylengruppe mit 5, 7 oder

8 C-Atomen oder für Einheiten

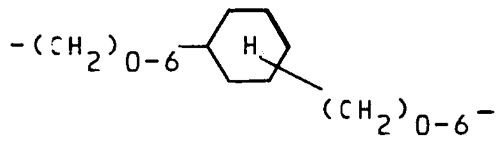

bzw.

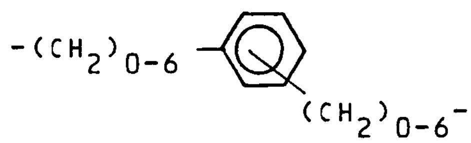

steht, wobei $R^1$, $R^2$ und $R^3$ gleich oder verschieden sind und die freien Valenzen der Sauerstoffatome entweder durch Siliciumatome von Gruppen der Formel (2) und/oder durch vernetzende Brückenglieder der Formeln
$SiO_{4/2}$ oder $SiR'O_{3/2}$ oder $SiR'_2\,O_{2/2}$ bzw.
$TiO_{4/2}$ oder $TiR'O_{3/2}$ oder $TiR'_2\,O_{2/2}$ bzw.
$AlO_{3/2}$ oder $AlR'O_{2/2}$
abgesättigt sind, wobei $R'$ für eine Methyl- oder Ethylgruppe steht, auf ein Siliciumatom in (2) 0 bis 10 Brückenatome Silicium, Titan und Aluminium kommen,
$R^4$ für Wasserstoff, eine 1 bis 8 C-Atome enthaltende lineare oder verzweigte Alkylgruppe, eine 5 bis 8 C-Atome enthaltende Cycloalkyl- oder die Benzylgruppe und
$X^{n-}$ für $[Rh(CO)_2J_2]^-$, $[RhCl_6]^{3-}$ oder $[RhCl_5]^{2-}$ und für gegebenenfalls daneben vorliegendes $Cl^-$, $Br^-$, $J^-$ steht.

2. Rhodium-haltige Organopolysiloxan-Ammoniumverbindungen nach Anspruch 1,
**dadurch gekennzeichnet**,
daß das molare Verhältnis zwischen den Anionentypen $[Rh(CO)_2J_2]^-$, $[RhCl_6]^{3-}$ oder $[RhCl_5]^{2-}$ und den Halogenionen zwischen 1 : 1 und 1 : 100 liegt.

3. Rhodium-haltige Organopolysiloxan-Ammoniumverbindungen nach Anspruch 1 oder 2,
**dadurch gekennzeichnet**,
daß $R^1$, $R^2$ und $R^3$ miteinander identisch sind und $R^4$ gleich Methyl ist.

4. Rhodium-haltige Organopolysiloxan-Ammoniumverbindungen nach Anspruch 3,
**dadurch gekennzeichnet**,
daß sie aus Einheiten der Formel

$$\left[(H_3C)\overset{+}{N}(CH_2CH_2CH_2SiO_{3/2})_3\right]_n\ X^{n-}$$

aufgebaut sind.

5. Verfahren zur Herstellung von Verbindungen gemäß den Ansprüchen 1 bis 4,
**dadurch gekennzeichnet**,
daß eine Organopolysiloxan-Ammoniumverbindung der Formel

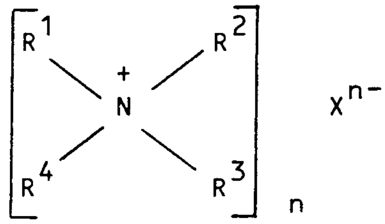

in der $R^1$ - $R^4$ denselben Bedeutungsumfang wie in Anspruch 1 haben, und die freien Valenzen der Sauerstoffatome entweder durch Siliciumatome weiterer Gruppen der Formel

$R^5$ - $SiO_{3/2}$

wobei $R^5$ dieselbe Bedeutung wie in Anspruch 1 hat, und/oder durch vernetzende Brückenglieder der Formeln
$SiO_{4/2}$ oder $SiR'O_{3/2}$ oder $SiR'_2\ O_{2/2}$ bzw.
$TiO_{4/2}$ oder $TiR'O_{3/2}$ oder $TiR'_2\ O_{2/2}$ bzw.
$AlO_{3/2}$ oder $AlR'O_{2/2}$
abgesättigt sind, wobei $R'$ für eine Methyl- oder Ethylgruppe steht, auf ein Siliciumatom in (2) 0 bis 10 Brückenatome Silicium, Titan und Aluminium kommen,
und
$X^{n-}$ für $Cl^-$, $Br^-$ oder $J^-$ steht,
mit stöchiometrischen, unterschüssigen oder überschüssigen Mengen der gegebenenfalls kristallwasserhaltigen Verbindungen
$Na_3RhCl_6$, $K_3RhCl_6$, $(NH_4)_3RhCl_6$, $(NH_4)_2RhCl_5$
oder der entsprechenden freien Säuren in Wasser oder einem polaren organischen Lösungsmittel, welches die Rhodiumverbindungen wenigstens teilweise löst, zum gegenseitigen teilweisen oder vollständigen Austausch der Anionen nach dem statischen oder dynamischen Prinzip umsetzt, den Rhodium-haltigen Feststoff gegebenenfalls von der flüssigen Phase abtrennt, und jeweils gegebenenfalls in beliebiger Reihenfolge wäscht, bei Raumtemperatur bis 200° C unter Schutzgas oder Vakuum trocknet, klassifiziert sowie bei 150 -250° C unter Schutzgas oder im Vakuum tempert.

**6.** Verfahren zur Herstellung von Verbindungen gemäß den Ansprüchen 1 bis 4, wobei $X^{n-}$ für $[Rh(CO)_2J_2]^-$ und für gegebenenfalls daneben vorliegendes $Cl^-$, $Br^-$ oder $J^-$ steht,
**dadurch gekennzeichnet**,
daß eine Organopolysiloxan-Ammoniumverbindung gemäß Ansprüchen 1 bis 4, wobei $X^{n-}$ für $[RhCl_6]^{3-}$ oder $[RhCl_5]^{2-}$ und gegebenenfalls für $Cl^-$, $Br^-$ oder $J^-$ steht, bei einer Temperatur von 60 - 200° C, in Gegenwart von Wasser, eines Alkyljodids mit 1 - 10 C-Atomen von elementarem Jod oder Jodwasserstoffsäure in einem polaren Lösungsmittel mit CO bei einem Gesamtdruck von ca. 1 bar bis ca. 200 bar umgesetzt wird und das Polysiloxan dann direkt der weiteren Verwendung zugeführt oder erst von der flüssigen Phase abgetrennt und jeweils gegebenenfalls in beliebiger Reihenfolge, gewaschen, bei Raumtemperatur bis 200° C getrocknet, klassifiziert und bei 150 - 250° C unter Schutzgasatmosphäre oder im Vakuum getempert wird.

**7.** Verfahren zur Herstellung von Verbindungen gemäß den Ansprüchen 1 bis 4, wobei $X^{n-}$ für $[Rh(CO)_2J_2]^-$ und für gegebenenfalls daneben vorliegendes $J^-$ oder $Br^-$ steht,
**dadurch gekennzeichnet**,
daß eine zumindest teilweise in einem polaren Lösungsmittel gelöste, gegebenenfalls kristallwasserhaltige Rhodiumverbindung der Formel
$Na_3RhCl_6$, $K_3RhCl_6$, $(NH_4)_3RhCl_6$, $(NH_4)_2RhCl_5$, $RhY_3$, $Rh(NO_3)_3$, $Rh_2O_3$, $Rh(acac)(CO)_2$, $RhH(CO)(PPh_3)_3$ $RhCl(AsPh_3)_3$, $RhCl(PPh_3)_3$, $[RhY(dien)]_2$, $[RhY(C_2H_4)_2]_2$, $[RhY(CO)_2]_2$, $[Rh(OAc)_2]_2$, $Rh(acac)_3$, $RhCl(CO)(PPh_3)_2$, wobei
Y = Chlor, Brom, Jod
dien = Cyclooctadien, Norbornadien
Ph = Phenyl
OAc = Acetat
acac = Acetylacetonat,

bei 60 - 200 ° C, in Gegenwart von Wasser, eines Alkyljodids mit 1 - 10 C-Atomen, von elementarem Jod oder Jodwasserstoffsäure und in Gegenwart eines Ammoniumpolysiloxans der Formel

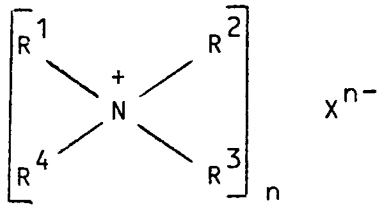

in der $R^1$ - $R^4$ und $X^{n-}$ dieselbe Bedeutung wie in Anspruch 1 haben und $X^{n-}$ nur für $Cl^-$, $Br^-$ oder $J^-$ steht, mit CO bei einem Gesamtdruck von 1 bis ca. 200 bar umgesetzt wird, bis das entstehende Rhodium-Anion $[Rh(CO)_2J_2]^-$ in das Ammoniumpolysiloxan teilweise oder vollständig eingebracht ist, der Feststoff gegebenenfalls von der flüssigen Phase abgetrennt und jeweils gegebenenfalls in beliebiger Reihenfolge, gewaschen, bei Raumtemperatur bis 200 ° C getrocknet, klassifiziert und bei 150 - 250 ° C unter Schutzgasatmosphäre oder im Vakuum getempert wird.

**8.** Verwendung der erfindungsgemäßen Rhodium-haltigen Organopolysiloxan-Ammoniumverbindungen als Katalysatoren für Carbonylierungsreaktionen.

**Claims**

**1.** Rhodium-containing organopolysiloxane ammonium compounds, characterized in that they are made up of units corresponding to the following general formula

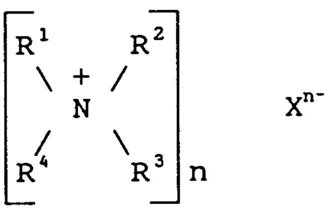 (1)

in which $R^1$, $R^2$ and $R^3$ represent a group corresponding to the following general formula:

$R^5 - SiO_{3/2}$ (2)

in which $R^5$ is a $C_{1-10}$ alkylene group, a $C_5$, $C_7$ or $C_8$ cycloalkylene group or units

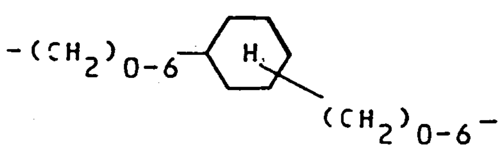

or

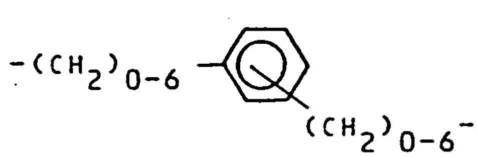

$R^1$, $R^2$ and $R^3$ being the same or different,
and the free valencies of the oxygen atoms are saturated either by silicon atoms or groups corresponding to formula (2) and/or by crosslinking bridge members corresponding to the formulae
$SiO_{4/2}$ or $SiR'O_{3/2}$ or $SiR'_2\,O_{2/2}$
$TiO_{4/2}$ or $TiR'O_{3/2}$ or $TiR'_2\,O_{2/2}$
$AlO_{3/2}$ or $AlR'O_{2/2}$
where R' is a methyl or ethyl group,
and, for every silicon atom in (2), there are 0 to 10 bridge atoms silicon, titanium and aluminium,
$R^4$ is hydrogen, a linear or branched $C_{1-8}$ alkyl group, a $C_{5-8}$ cycloalkyl group or the benzyl group and
$X^{n-}$ represents $[Rh(CO)_2I_2]^-$, $[RhCl_6]^{3-}$ or $[RhCl_5]^{2-}$ and any $Cl^-$, $Br^-$, $I^-$ additionally present.

2. Rhodium-containing organopolysiloxane ammonium compounds as claimed in claim 1, characterized in that the molar ratio between the anions $[Rh(CO)_2I_2]^-$, $[RhCl_6]^{3-}$ or $[RhCl_5]^{2-}$ and the halogen ions is between 1:1 and 1:100.

3. Rhodium-containing organopolysiloxane ammonium compounds as claimed in claim 1 or 2, characterized in that $R^1$, $R^2$ and $R^3$ are identical to one another and $R^4$ is methyl.

4. Rhodium-containing organopolysiloxane ammonium compounds as claimed in claim 3, characterized in that they are made up of units corresponding to the following formula:

$$[(H_3C)\overset{+}{N}(CH_2CH_2CH_2SiO_{3/2})_3]_n\ X^{n-}$$

5. A process for the production of the compounds claimed in claims 1 to 4, characterized in that an organopolysiloxane ammonium compound corresponding to the following formula:

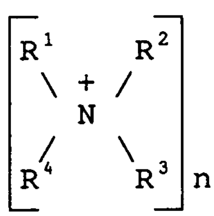

$X^{n-}$

in which $R^1$ to $R^4$ have the same meanings as in claim 1 and the free valencies of the oxygen atoms are saturated either by silicon atoms of other groups corresponding to the formula

$R^5 - SiO_{3/2}$ (2)

in which $R^5$ has the same meaning as in claim 1, and/or by crosslinking bridge members corresponding to the following formulae
$SiO_{4/2}$ or $SiR'O_{3/2}$ or $SiR'_2\,O_{2/2}$
$TiO_{4/2}$ or $TiR'O_{3/2}$ or $TiR'_2\,O_{2/2}$
$AlO_{3/2}$ or $AlR'O_{2/2}$
where R' is a methyl or ethyl group.
and - for every silicon atom in (2) - there are 0 to 10 bridge atoms silicon, titanium and aluminium, and
$X^{n-}$ represents $Cl^-$, $Br^-$ or $I^-$,
is reacted with stoichiometric, less than stoichiometric or more than stoichiometric quantities of the compounds
$Na_3RhCl_6$, $K_3RhCl_6$, $(NH_4)_3RhCl_6$, $(NH_4)_2RhCl_5$
optionally containing water of crystallization or the corresponding free acids in water or a polar organic solvent, which at least partly dissolves the rhodium compounds, for the mutual partial or complete replacement of the anions on the static or dynamic principle, the rhodium-containing solid is optionally separated from the liquid phase and, optionally in any order, is washed, dried in an inert gas or *in vacuo* at temperatures from room temperature to 200 °C, graded and heated in an inert gas or *in*

*vacuo* at temperatures of 150 to 250 ° C.

**6.** A process for the production of the compounds claimed in claims 1 to 4, $X^{n-}$ representing $[Rh(CO)_2I_2]^-$ and any $Cl^-$, $Br^-$ or $I^-$ additionally present, characterized in that an organopolysiloxane ammonium compound according to claims 1 to 4, in which $X^{n-}$ stands for $[RhCl_6]^{3-}$ or $[RhCl_5]^{2-}$ and, optionally, for $Cl^-$, $Br^-$ or $I^-$, is reacted with CO at 60 to 200 ° C in the presence of water, a $C_{1-10}$ alkyl iodide, elemental iodine or hydriodic acid in a polar solvent under a total pressure of approx. 1 bar to approx. 200 bar and the polysiloxane is then directly used or is first separated from the liquid phase and - optionally in any order - is washed, dried at temperatures from room temperature to 200 ° C, graded and heated at 150 to 250 ° C in an inert gas atmosphere or *in vacuo*.

**7.** A process for the production of the compounds claimed in claim 1, $X^{n-}$ representing $[Rh(CO)_2I_2]^-$ and any $I^-$ or $Br^-$ additionally present, characterized in that one of the following rhodium compounds optionally containing water of crystallization and at least partly dissolved in a polar solvent:
$Na_3RhCl_6$, $K_3RhCl_6$, $(NH_4)_3RhCl_6$, $(NH_4)_2RhCl_5$ $RhY_3$, $Rh(NO_3)_3$, $Rh_2O_3$, Rh(acac)($CO_2$), RhH(CO)-$(PPh_3)_3$ $RhCl(AsPh_3)_3$, $RhCl(PPh_3)_3$, $[RhY(dien)]_2$, $[RhY(C_2H_4)_2]_2$, $[RhY(CO)_2]_2$, $[Rh(OAc)_2]_2$, $Rh(acac)_3$, $RhCl(CO)(PPh_3)_2$,
in which

| | | |
|---|---|---|
| Y | = | chlorine, bromine, iodine |
| dien | = | cyclooctadiene, norbornadiene |
| pH | = | phenyl |
| OAc | = | acetate, |
| acac | = | acetyl acetonate, |

is reacted with CO at 60 to 200 ° C in the presence of water, an alkyl iodide containing 1 to 10 carbon atoms, elemental iodine or hydriodic acid and in the presence of an ammonium polysiloxane corresponding to the following formula

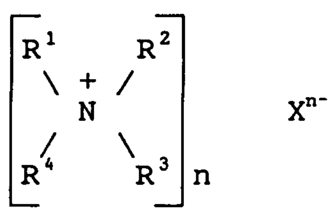

in which $R^1$ to $R^4$ and $X^{n-}$ are as defined in claim 1 and $X^{n-}$stands only for $Cl^-$, $Br^-$ or $I^-$,
under a total pressure of 1 to approx. 200 bar until the rhodium anion formed $[Rh(CO)_2I_2]^-$ has been partly or completely introduced into the ammonium polysiloxane, the solid is optionally separated from the liquid phase and - optionally in any order - is washed, dried at temperatures from room temperature to 200 ° C, graded and heated at 150 to 250 ° C in an inert gas atmosphere or *in vacuo*.

**8.** The use of the rhodium-containing organopolysiloxane ammonium compounds according to the invention as catalysts for carbonylation reactions.

## Revendications

**1.** Composés organopolysiloxane-ammonium contenant du rhodium, caractérisés en ce qu'ils sont constitués de motifs de formule générale:

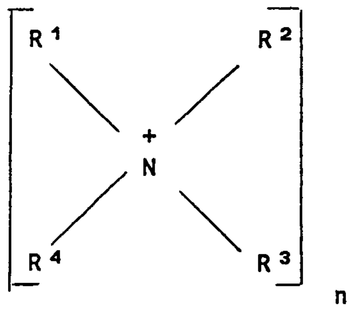 $X^{n-}$ (1)

dans laquelle $R^1$, $R^2$ et $R^3$ représentent un groupe de formule générale:

$R^5$ - $SiO_{3/2}$ (2)

dans laquelle $R^5$ représente un groupe alkylène ayant de 1 à 10 atomes de carbone, un groupe cycloalkylène ayant 5, 7 ou 8 atomes de carbone, ou des groupements

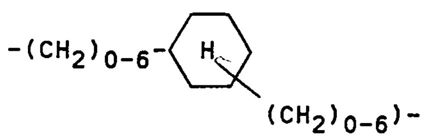

ou

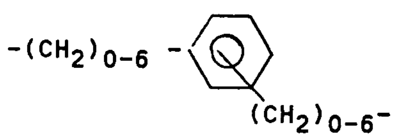

$R^1$, $R^2$ et $R^3$ étant identiques ou différents , et les valences libres des atomes d'oxygène étant saturées soit par des atomes de silicium, de groupe de formules (2) soit/et par des chaînons pontants réticulants de formules:
$SiO_{4/2}$ ou $SiR'O_{3/2}$ ou $SiR'_2O_{2/2}$ ou bien
$TiO_{4/2}$ ou $TiR'O_{3/2}$ ou $TiR'_2O_{2/2}$ ou bien
$AlO_{3/2}$ ou $AlR'O_{2/2}$,
R' représentant un groupe méthyle ou éthyle de 0 à 10 atomes pontaux de silicium, titane et aluminium venant sur un atome de silicium en (2);
$R^4$ représente un atome d'hydrogène, un groupe alkyle linéaire ou ramifié contenant de 1 à 8 atomes de carbone, un groupe cycloalkyle contenant de 5 à 8 atomes de carbone ou le groupe benzyle; et
$X^{n-}$ représente $[Rh(CO)_2I_2]^-$, $[Rh(Cl_6]^{3-}$ ou $[RhCl_5]^{2-}$ et éventuellement $Cl^-$, $Br^-$, $I^-$ additionellement présent.

2. Composés organopolysiloxane-ammonium contenant du rhodium selon la revendication 1, caractérisés en ce que le rapport molaire entre les types d'anions $[Rh(CO)_2I_2]^-$, $[RhCl_6]^{3-}$ ou $[RhCl_5]^{2-}$ et les anions halogénure est compris entre 1 : 1 et 1 : 100.

3. Composés organopolysiloxane-ammonium contenant du rhodium selon la revendication 1 ou 2, caractérisés en ce que $R^1$, $R^2$ et $R^3$ sont identiques et $R^4$ est le groupe méthyle.

4. Composés organopolysiloxane-ammonium contenant de rhodium selon la revendication 3, caractérisés en ce qu'ils sont constitués de motifs de formule:

$$[(H_3C)\overset{+}{N}(CH_2CH_2CH_2SiO_{3/2})_3]_n \quad X^{n-}$$

**5.** Procédé pour la préparation de composés selon l'une quelconque des revendications 1 à 4, caractérisé en ce que l'on fait réagir selon le principe statique ou dynamique un composé organopolysiloxane-ammonium de formule:

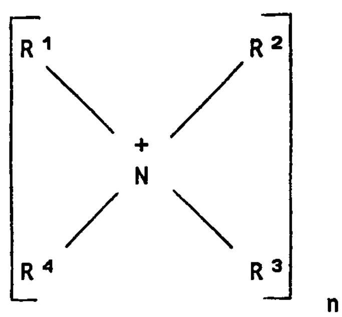 $X^{n-}$ (1)

dans laquelle $R^1$ - $R^4$ ont le même ensemble de significations que dans la revendication 1, et les valences libres des atomes d'oxygène sont saturées soit par des atomes de silicium d'autres groupes de formule:

$R^5$ - $SiO_{3/2}$

dans laquelle $R^5$ a la même signification que dans la revendication 1, soit/et par des chaînons pontants réticulants de formules:
$SiO_{4/2}$ ou $SiR'O_{3/2}$ ou $SiR'_2O_{2/2}$ ou bien
$TiO_{4/2}$ ou $TiR'O_{3/2}$ ou $TiR'_2O_{2/2}$ ou bien
$AlO_{3/2}$ ou $AlR'O_{2/2}$,
R' représentant un groupe méthyle ou éthyle de 0 à 10 atomes pontaux de silicium, titane ou aluminium venant sur un atome de silicium en (2),
$X^{n-}$ représentant $Cl^-$, $Br^-$ ou $I^-$,
avec des quantités inférieures, égales ou supérieures aux quantités stoechiométriques des composés
$Na_3RhCl_6$, $K_3RhCl_6$, $(NH_4)_3RhCl_6$, $(NH_4)_2RhCl_5$
contenant éventuellement de l'eau de cristallisation, ou des acides libres correspondants, dans l'eau ou dans un solvant organique polaire qui dissout au moins en partie les composés à base de rhodium, pour l'échange mutuel, en partie ou en totalité, des anions, éventuellement on sépare d'avec la phase liquide la substance solide contenant du rhodium et, éventuellement, dans un ordre quelconque, on la lave, on la sèche à une température dans la plage allant de la température ambiante jusqu'à 200° C, sous vide ou sous gaz inerte, on la classifie et on la soumet à un étuvage à 150 - 250° C sous gaz inerte ou sous vide.

**6.** Procédé pour la préparation de composés selon l'une des revendications 1 à 4, dans lesquels $X^{n-}$représente $[Rh(CO)_2I_2]^-$ et $Cl^-$, $Br^-$ ou $I^-$ éventuellement présent en outre, caractérisé en ce que l'on fait réagir un composé organopolysiloxane-ammonium selon l'une quelconque des revendications 1 à 4, dans lequel $X^{n-}$ représente $[RhCl_6]^{3-}$ ou $[RhCl_5]^{2-}$ et éventuellement $Cl^-$, $Br^-$ ou $I^-$, à une température de 60 à 200° C en présence d'eau, d'un iodure d'alkyle ayant de 1 à 10 atomes de carbone, d'iode élémentaire ou d'acide iodhydrique, dans un solvant polaire, avec CO à une pression totale d'environ 1 bar à environ 200 bar, et on envoie ensuite le polysiloxane directement a l'utilisation ultérieure, ou seulement après l'avoir séparé de la phase liquide et éventuellement, dans un ordre quelconque, l'avoir lavé, séché à une température dans la plage allant de la température ambiante à 200° C, classifié et soumis à un étuvage à 150 - 250° C sous une atmosphère de gaz inerte ou sous vide.

**7.** Procédé pour la préparation de composés selon l'une quelconque des revendications 1 à 4, dans lesquels $X^{n-}$ représente $[Rh(CO)_2I_2]^-$ et $I^-$ ou $Br^-$ éventuellement présent en outre, caractérisé en ce que l'on fait réagir avec CO sous une pression totale de 1 bar à environ 200 bars, un composé à base de rhodium, de formules $Na_3RhCl_6$, $K_3RhCl_6$, $(NH_4)_3RhCl_6$, $(NH_4)_2RhCl_5$, $RhY_3$, $Rh(NO_3)_3$, $Rh_2O_3$, Rh-(acac)$(CO)_2$, $RhH(CO)(PPh_3)_3$, $RhCl(AsPh_3)_3$, $RhCl(PPh)_3$, [RhY(diène)]$_2$, $[RhY(C_2H_4)_2]_3$, $[RhY(CO)_2]_2$, $[Rh(OAc)_2]_2$, Rh(acac)$_3$, $RhCl(CO)(PPh_3)_2$, dans lesquelles:

Y : représente un atome de chlore, brome, iode,
diène : cyclooctadiène, norbornadiène,
Ph : phényle
OAc : acétate
acac : acétylacétonate,

contenant éventuellement de l'eau de cristallisation, au moins partiellement dissous dans un solvant polaire, à 60 - 200° C, en présence d'eau, d'un iodure d'alkyle ayant de 1 à 10 atomes de carbone, d'iode élémentaire ou d'acide iodhydrique et en présence d'un ammonium polysiloxane de formule:

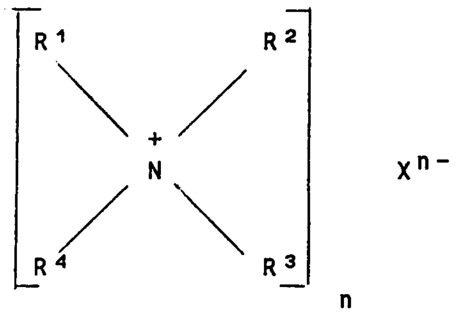

(1)

dans laquelle $R^1$ - $R^4$ et $X^{n-}$ ont les mêmes significations que dans la revendication 1, et $X^{n-}$ ne répresente que $Cl^-$, $Br^-$ ou $I^-$, jusqu'à ce que l'anion $[Rh(CO)_2I_2]^-$ soit en partie ou en totalité introduit dans l'ammonium-polysiloxane, on sépare éventuellement le solide d'avec la phase liquide, et éventuellement, dans un ordre quelconque, on le sèche à une température dans la plage allant de la température ambiante à 200° C, on classifie et on le soumet à un étuvage sous une atmosphère de gaz inerte ou sous vide, à 150 - 250° C.

**8.** Utilisation des composés organopolysiloxane-ammonium contenant du rhodium sel on l'invention, en tant que catalyseurs pour des réactions de carbonylation.